(19) Europäisches Patentamt

European Patent Office

Office européen des brevets

(11) Publication number: **0 258 199**
**A1**

(12) # EUROPEAN PATENT APPLICATION

(21) Application number: 87850255.8

(22) Date of filing: 26.08.87

(51) Int. Cl.⁴: **G 09 B 19/16**

(30) Priority: 28.08.86 FI 863491

(43) Date of publication of application:
02.03.88 Bulletin 88/09

(84) Designated Contracting States:
BE DE ES FR GB IT NL SE

(71) Applicant: **Villarreal, Antonio**
**Porttiniityntie 8A**
**SF-02180 Espoo (FI)**

(72) Inventor: **Villarreal, Antonio**
**Porttiniityntie 8A**
**SF-02180 Espoo (FI)**

(74) Representative: **Siebmanns, Hubertus**
**Götalands Patentbyra AB Box 154**
**S-561 22 Huskvarna (SE)**

(54) **Identification device.**

(57) The invention relates to an identification device for identifying different types of vessels and corresponding distinctive signs. The apparatus of the invention comprises means for recording the observed lights, signal shapes i.e. daylight signals or sound signals in the device, as well as display means for displaying the corresponding lights, signal mark shapes, sound signals and/or vessel types.

■ = black
▥ = blue
▨ = green
▧ = red
▤ = yellow

Fig. 1

EP 0 258 199 A1

## Description

IDENTIFICATION DEVICE

The present invention relates to an identification device for identifying different types of vessels and corresponding distinctive signs.

The international rules of the road at sea determine the particular lights, signal shapes i.e. daylight signals and sound signals for each type of vessel. Because the duty to keep out of way at sea is determined according to the vessel type, every navigator should be able to identify the different types relatively quickly on the basis of the said signs. However, suitable facilities and devices for teaching and studying these signs do not exist, but various recognition systems have been developed individually. In the prior art there are used for instance series of different light combinations drawn on plastic film or paper, or the sign system is illustrated by colour photographs or by drawings from maritime literature. Consequently each student has to do an excessive amount of work in order to learn the lights, the daylight signals and the sound and light signals. These matters are, however, properly learned only in the course of a long and continuous practical working service at sea.

The object of the present invention is to eliminate the aforementioned drawbacks. A particular object of the present invention is to introduce a device by means of which the distinctive signs pertaining to various types of vessels, or the vessel types corresponding to the observed signs, are easily identified even at sea.

The characteristic novel features of the invention are enlisted in the appended patent claims.

The identification device of the invention comprises means for recording the observed lights, signal shapes or sound signals in the indentification device, as well as display means where the corresponding vessel type, lights, signal shapes and/or sound signals can be read. Thus, when a signal pertaining to a particular type of vessel is observed, the device gives the rest of the identification signs as well as names the type of vessel in question.

In a preferred embodiment of the invention, the device comprises two plates which are placed one on top of the other and are movable with respect to each other, so that the topmost plate is provided with suitable apertures and the bottom plate illustrates the names of different vessel types, the corresponding masthead lights, sidelights and sternlights, the corresponding daylight signals and sound signals according to the international rules of road at sea, all of which information is so placed on the bottom plate that through the apertures of the topmost plate, there are seen all of the distinctive signs of one particular vessel type at a time.

The superimposed plates are advantageously round discs, which are journalled at the center to be rotatable with respect to each other.

In another embodiment of the invention, the device is an electronically operated apparatus, wherein the box containing a power source comprises a keyboard, whereby the observed light signals, signal shapes and/or sound signals are feedable into the apparatus. Moreover, the apparatus comprises a microcircuit or equivalent whereinto the distinctive signs of different types of vessels are computed, as well as a display screen which monitors the type of vessel which corresponds to the information fed into the apparatus.

Compared to the prior art, the present invention has the advantage that in real working conditions at sea the device enables a rapid and accurate identification of vessels, and in addition to this it is simple and therefore easy to use. The same device can also be used as a remarkable aid in naval studies.

In the following the invention is explained in more detail with reference to the appended drawings, where figure 1 is an illustration of the first disc of a preferred embodiment of the invention, figure 2 is an illustration of the second disc of the same embodiment, and figure 3 is an illustration of another embodiment of the invention.

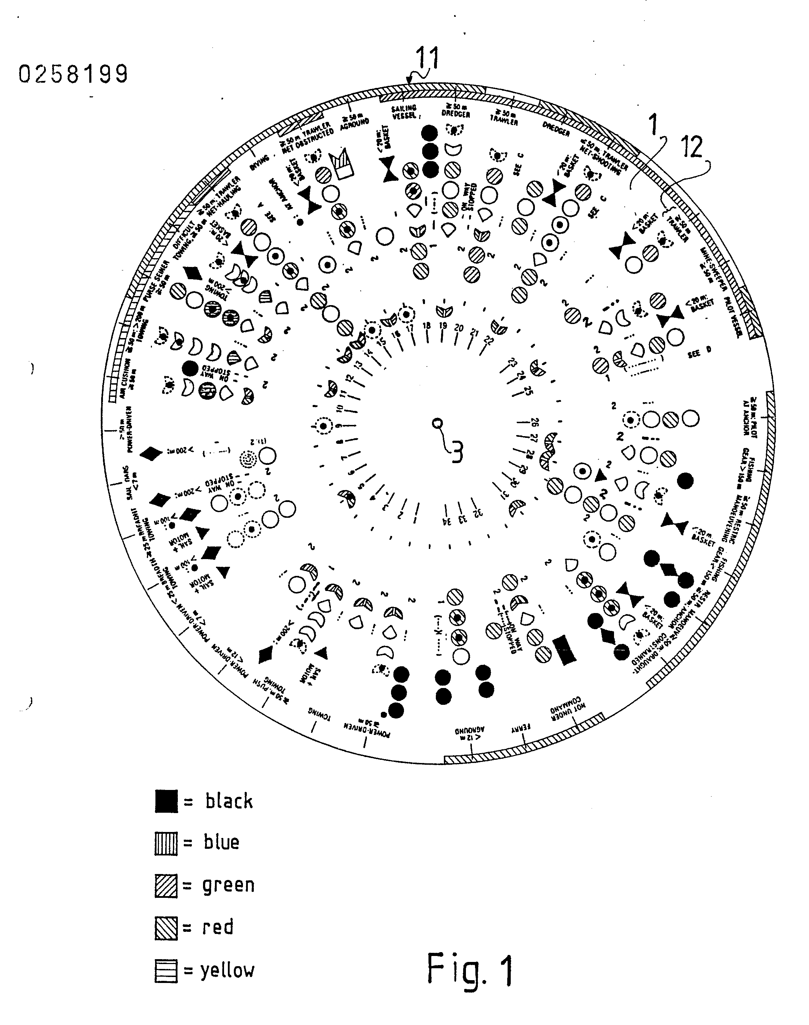

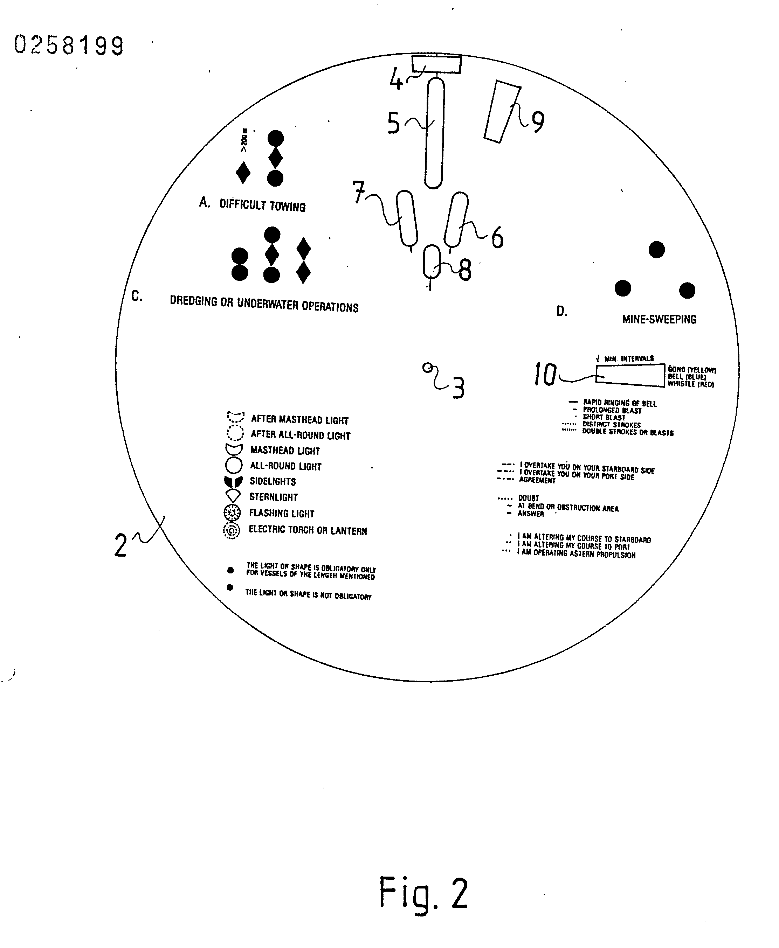

The preferred embodiment of the invention illustrated in figures 1 and 2 comprises the first round disc 1 and the second round disc 2. The discs are connected at their centres 3 so that they are rotatable with respect to each other. The first disc is somewhat larger in diameter than the second disc, so that when the second disc is placed on top of the first, the outer circumference of the first disc remains in sight from under the second disc. In this circumference there are arranged the colour guides 11, the significance whereof is explained further below.

In the first disc, in the zone next to the colour guides, there is a circular belt 12 enlisting various types of vessels, such as sailing vessel, dredger or pilot vessel, as well as activities or properties connected thereto, for instance not under command or aground. On the respective spot in the second disc 2 there is the vessel type aperture 4, wherethrough the relevant information can be read vessel by vessel, one at a time.

In the second disc 2, somewhat to the center with respect to the vessel type aperture 4, there is provided an elongate masthead light aperture 5, and further to the center, on both sides of the masthead light aperture 5, the right 6 and the left 7 sidelight apertures respectively, as well as in between these two, even further towards the center of the disc, the sternlight aperture 8. In the first disc 1 there are provided, at spots matching to the said light apertures, the signs corresponding to each vessel so that when a given type of vessel is named in the aperture 4, the apertures 5-8 show the masthead light, sidelights and sternlight pertaining to this vessel type. Moreover, the second disc 2 is provided with a signal shape, i.e. daylight signal aperture 9, while the corresponding daylight signals are arranged on the first disc 1 so that they are likewise readable simultaneously with the vessel lights. In addition to this, the second disc 2 is provided with a sound signal aperture 10, and the first disc 1 is provided, at a matching spot, with a description of the sound signals to be given with a gong, bell or whistle for example in fog, and which description is accordingly read along with the rest of the information for the particular vessel type named in the aperture 4.

The colour guides 11 at the circumferential zone of the first disc are planned so as to allow for a quick and rapid use of the device. The guide zone contains areas of different colours, so that when a light signal of a given colour is observed at sea, the search of the corresponding vessel type can be focused on the said colour area, and the user is saved from searching through the whole device at random.

According to figure 1, the center of the first disc 1 is also provided with a circle of numerals, which numerals refer to the different types of vessels enlisted on the plate, and the respective numbers and detailed vessel information is found at the back of the first disc. Similarly, as is illustrated in figure 2, on the surface of the second disc 2 there are printed instructions which guide and help in the use of the device.

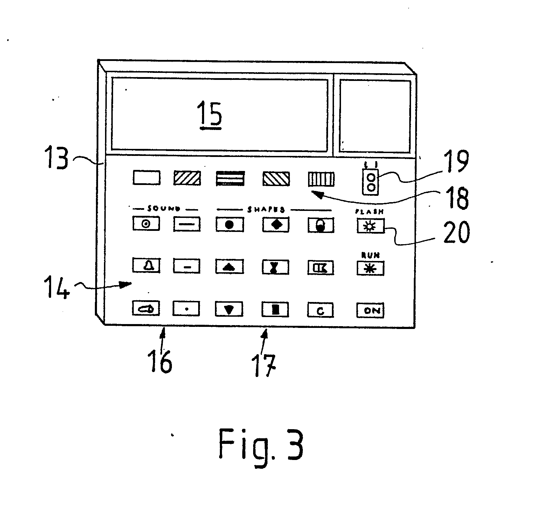

Figure 3 illustrates another embodiment of the present invention, this embodiment comprising the box 13, the keyboard 14 and the display screen 15. Moreover, the box contains a power source and a microcircuit or the like, whereinto the distinctive lights, signal shapes and sound signals of different types of vessels according to the international rules of the road at sea are computed.

The keyboard contains six signal keys 16, by aid of which the different sound signals, according to the instructions printed on the disc 2 of figure 2, can be recorded. Similarly the keyboard contains the keys 17 indicating the shapes of the daylight and light signals, four colour keys 18, from left to right: green, yellow, red and blue, and the flashlight key 20. The keyboard also contains normal keys for switching the device on and off. In addition to this, there is provided a locking key 19, by means of which the observations are fed according to the order of height, starting from the top and descending to the bottom, whereas the feeding normally takes place, according to the observations, from left to right.

The apparatus is operated so that a combination of lights, a signal shape or a sound signal is typed in the observation order from left to right, or - by aid of key 19 - from top to bottom and recorded in the device, whereafter the run-key is pushed, so that the display screen 15 shows the type of vessel corresponding to the observation, and possibly also an arrow indicating the course of the vessel. In an additional modification of the invention, the display screen 15 also shows the typed, observed mark, so that the correctness of the recording is easily checked.

The above described embodiments are only meant to be illustrative examples of the present invention, and several applications and modifications can be made within the scope of the inventional idea defined in the appended patent claims.

## Claims

1. An identification device for identifying different types of vessels and corresponding distinctive signs, **characterized** in that the device comprises means for recording the observed lights, signal shapes i.e. daylight signals and sound signals in the device, as well as display means for displaying the lights, signal shapes, sound signals and/or types of vessels corresponding to the observation.

2. The device of claim 1, **characterized** in that the device comprises a first disc (1), on the surface whereof there are provided in circular zones, sector by sector, the names of the different types of vessels, the corresponding lights, signal shapes and the sound signals; as well as a second disc (2) movable with respect to the first disc and provided with apertures (4-10), wherethrough the information contained in the zones of the first disc are readable, one vessel type at a time.

3. The device of claim 2, **characterized** in that the first (1) and the second (2) disc are round plates journalled at their centres to each other.

4. The device of claim 2 or 3, **characterized** in that each circular zone containes at least two kinds of information, varying sector by sector according to the apertures (4-10) of the second disc (2).

5. The device of claim 3 or 4, **characterized** in that the outer circumference of the first disc (1) is provided with colour guides (11) in order to make the use of the device quicker.

6. The device of any of the claims 2-5, **characterized** in that the second disc is provided with a vessel type aperture (4), a mastlight aperture (5), a right and left sidelight aperture (6, 7), a sternlight aperture (8), a daylight signal aperture (9) as well as a sound signal aperture (10), so that when one aperture is correctly matched with the first disc, the rest of the information relating to the type of vessel in question is readable through the other apertures.

7. The device of claim 1, **characterized** in that the device is an electronically operated apparatus comprising a box (13); a power source; a keyboard (14) for feeding light signals, signal shapes and/or sound signals into the apparatus; a microcircuit or the like, whereinto the distinctive signs of different types of vessels are computed; as well as a display screen (15) for monitoring the type of vessel and relevant distinctive signs corresponding to the registered observation.

8. The device of claim 7, **characterized** in that the distinctive signs are the name of the vessel type, the masthead light, the sidelights, the sternlight, the daylight signals and the sound signal.

0258199

= black

= blue

= green

= red

= yellow

Fig. 1

0258199

A. DIFFICULT TOWING

C. DREDGING OR UNDERWATER OPERATIONS

D. MINE-SWEEPING

AFTER MASTHEAD LIGHT
AFTER ALL-ROUND LIGHT
MASTHEAD LIGHT
ALL-ROUND LIGHT
SIDELIGHTS
STERNLIGHT
FLASHING LIGHT
ELECTRIC TORCH OR LANTERN

● THE LIGHT OR SHAPE IS OBLIGATORY ONLY FOR VESSELS OF THE LENGTH MENTIONED

● THE LIGHT OR SHAPE IS NOT OBLIGATORY

↓ MIN. INTERVALS

GONG (YELLOW)
BELL (BLUE)
WHISTLE (RED)

— RAPID RINGING OF BELL
– PROLONGED BLAST
· SHORT BLAST
······ DISTINCT STROKES
······ DOUBLE STROKES OR BLASTS

–··· I OVERTAKE YOU ON YOUR STARBOARD SIDE
–··· I OVERTAKE YOU ON YOUR PORT SIDE
– ··· AGREEMENT

····· DOUBT
– AT BEND OR OBSTRUCTION AREA
– ANSWER

· I AM ALTERING MY COURSE TO STARBOARD
·· I AM ALTERING MY COURSE TO PORT
··· I AM OPERATING ASTERN PROPULSION

Fig. 2

0258199

Fig. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 249 085 (R.J.ST. JEAN) <br> * Whole document * | 1,3 | G 09 B 19/16 |
| A | | 2,4,6 | |
| A | FR-A-2 172 782 (J. DOUAGLIN) <br> * Pages 1-3; figures * | 1-4 | |
| A | GB-A-2 159 652 (M. MORGAN) <br> * Whole document * | 1,7,8 | |

TECHNICAL FIELDS
SEARCHED (Int. Cl.4)

G 09 B
G 06 C

The present search report has been drawn up for all claims

| Place of search | Date of completion of the search | Examiner |
|---|---|---|
| THE HAGUE | 30-11-1987 | ODGERS M.L. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)